# EUROPÄISCHE PATENTANMELDUNG

(11) **EP 0 549 025 A1**
(43) Veröffentlichungstag der Anmeldung: **30.06.1993**
(21) Anmeldenummer: 92203779.1
(22) Anmeldetag: 04.12.1992
(51) Int. Cl.: C08J 11/28, C08L 81/04, C08G 75/14

(54) **Verfahren zur Wiederaufarbeitung ausgehärteter Polysulfid- und/oder Polymercaptan-Elastomere**

(30) Priorität: 21.12.1991 DE 4142500
(71) Anmelder: METALLGESELLSCHAFT Aktiengesellschaft, D-60015 Frankfurt (DE)
(72) Erfinder: Unger, Gerfried, Dr., W-6000 Franfurt am Main (DE); Hecktor, Ralph-Josef, W-6360 Friedberg 5 (DE); Theobald, Reiner, W-6000 Frankfurt am Main (DE); Specht, Franz, W-6000 Frankfurt am Main (DE)

(57) **Zusammenfassung**

Die Erfindung betrifft ein Verfahren zur Wiederaufarbeitung von ausgehärteten Polysulfid- und/oder Polymercaptan-Elastomeren. Die Aufarbeitung wird vorgenommen, indem man 0,5 bis 400 Gew.% Elastomer mit einer flüssigen Di- oder Polymercaptoverbindung zu flüssig-pastösen mercaptoendständigen Präpolymeren umsetzt. Die weitgehend chemisch inerten, ausgehärteten Polysulfid- und/oder Polymercaptan-Elastomeren lassen sich auf diese Weise nutzen und sind für den erneuten Einsatz als Polysulfid- und/oder Polymercaptan-Dichtmassen einsetzbar.

## Beschreibung

Die Erfindung betrifft ein Verfahren zur Wiederaufarbeitung ausgehärteter Polysulfid- und/oder Polymercaptan-Elastomere.

Derartige Elastomere fallen bei der Verarbeitung von reaktiven, ein- oder mehrkomponentigen Polysulfid- und/oder Polymercaptan-Präpolymeren zu Dichtstoffen oder Beschichtungsmaterialien als Reststoffe und Abfälle an. Flüssige und pastöse Reste der Einzelkomponenten von mehrkomponentigen Systemen können durch Rückführung in den Produktionsprozeß weitgehend wiederverwendet werden. Nach der US-PS 4 623 711 können hochviskose Polymercaptan-Flüssigpolymere auch durch Umsetzung mit niedrigmolekularen organischen Dimercaptanen in Gegenwart von organischen Aminen in niedrigviskose Flüssigpolymere umgesetzt werden, die aufgrund ihrer modifizierten Endgruppen die Herstellung von stabileren ausgehärteten Polymeren erlauben sollen.

Sobald die Einzelkomponenten mehrkomponentiger Systeme in Kontakt zueinander gekommen sind oder der Reaktionsprozeß einkomponentiger Systeme gestartet wurde, sind dabei entstehende, teilweise oder vollständig ausgehärtete, feste Elastomerreste oder -abfälle bis jetzt nicht mehr wiederverwendbar und müssen als Abfall entsorgt werden. Diese Materialien zeichnen sich insbesondere durch ihre Licht- und Ozon-Beständigkeit sowie ihre Beständigkeit gegen viele Chemikalien aus (s. E. Dachselt, Thioplaste, Leipzig (1971), S. 50-56 und A. Damusis, Sealants, New York (1967), S. 182). Bei einkomponentigen Systemen können derartige Reste beispielsweise schon während der Herstellung in den Produktionsanlagen entstehen. Während der Verarbeitung verbleiben Reste in den Verarbeitungsgebinden, wie z.B. Kartuschen. Bei ein- und mehrkomponentigen Systemen entstehen teilweise oder vollständig ausgehärtete Reste in den materialführenden Teilen von Verarbeitungsanlagen, beim Anfahren oder Abschalten dieser Anlagen, bei deren Reinigung oder beim Entfernen überschüssiger Mengen während des Applizierens auf die Bauteile.

Nicht wiederverwertbare und als Abfall zu entsorgende, feste Elastomere entstehen auch nach Ende der Lebensdauer der Bauteile, in denen diese Elastomere entsprechend ihrem Verwendungszweck eingesetzt werden.

Polysulfid- oder Polymercaptan-Compounds werden z.B. als Dichtstoffe oder Beschichtungsmaterialien eingesetzt. Ausgehärtete Polysulfid- oder Polymercaptan-Fugendichtstoffe müssen beim Umbau, der Sanierung oder Demontage von Bauwerken als Abfall entsorgt werden. Polysulfid- oder Polymercaptan-Isolierglasdichtstoffe sind nach Ende der Lebensdauer einer Isolierglasscheibe oder bei deren vorzeitigem Ausbau als Abfall zu entsorgen. Ausgehärtete Polysulfid- oder Polymercaptan-Dichtstoffe aus der Luftfahrt werden nach Außerdienststellung der Flugzeuge entsorgt. Auf ähnliche Weise fallen Polysulfid- oder Polymercaptan-Beschichtungsmassen jeglicher Art bei Demontage des Bauteils als Abfall an. In vielen Fällen wird die Entsorgung dadurch erschwert, daß die ausgehärteten Elastomere sehr gut auf dem Untergrund haften.

In der EP-PS 0 188 833 wird ein Mittel, bestehend aus einer Mercaptogruppen oder Di- oder Polysulfidgruppen aufweisenden Verbindung und einem Amin, beschrieben, ausgehärtete Polysulfid-Dichtstoffe durch Depolymerisation wieder in einen flüssig-pastösen Zustand zu überführen. Unter Mithilfe eines Lösungsmittels zur Viskositätserniedrigung ermöglicht dieses Mittel die Reinigung von Verarbeitungsmaschinen oder Bauteilen von Polysulfid-Dichtstoffresten. Die dabei entstehenden, in Lösungsmitteln gelösten Abbauprodukte der Polysulfid-Dichtstoffe sind jedoch nicht mehr über den bekannten oxidativen Härtungsmechanismus von Polysulfid- oder Polymercaptan-Systemen aushärtbar. Sie sind damit für den gleichen oder einen ähnlichen Verwendungszweck unbrauchbar und werden als Abfall entsorgt. Wegen des Lösungsmittelgehalts und der Inhaltstoffe derartiger Mischungen aus Lösungsmittel und depolymerisiertem Dichtstoff ist eine Entsorgung als Sondermüll unumgänglich.

Aufgabe der vorliegenden Erfindung ist es, ein Verfahren zu schaffen, das es ermöglicht, ausgehärtete, feste Polysulfid- und/oder Polymercaptan-Elastomere nicht mehr als Abfall entsorgen zu müssen, sondern sie wiederaufzuarbeiten.

Erfindungsgemäß wird die Aufgabe dadurch gelöst, daß man 0,5 bis 400 Gew.% ausgehärtete Polysulfid- und/oder Polymercaptan-Elastomere mit flüssigen Di- oder Polymercaptoverbindungen zu flüssig-pastösen mercaptoendständigen Präpolymeren umsetzt. Die eingesetzte Menge an flüssigen Di- oder Polymercaptoverbindungen entspricht immer 100 Gew.%. Das Verfahren hat den Vorteil, daß sich die weitestgehend chemisch inerten, ausgehärteten, festen Polysulfid- und/oder Polymercaptan-Elastomere wieder zu flüssig-pastösen Produkten mit Mercaptoendgruppen umsetzen lassen.

In besonders vorteilhafter Weise werden nach der Erfindung die granulierten, ausgehärteten Polysulfid- und/oder Polymercaptan-Elastomeren mit niedermolekularen Polysulfid- und/oder Polymercaptan-Flüssigpolymeren bei Temperaturen von 0 bis 100°C umgesetzt. Der Vorteil dieser Umsetzung besteht darin, daß damit keine systemfremden Hilfsstoffe wie Lösungsmittel benötigt werden.

Vorteilhaft für die Aufarbeitung der ausgehärteten Polysulfid- und/oder Polymercaptan-Elastomeren ist es weiterhin, die Umsetzung in Gegenwart einer basischen Verbindung vorzunehmen. Die Reaktionszeit der Umsetzung läßt sich durch den Zusatz einer basischen Verbindung verkürzen. Als basische Verbindungen eignen sich u.a. Alkalialkoholate, Amine und Amide.

Eine bevorzugte Ausführungsform des Verfahrens besteht in der Umsetzung von 0,5 bis 20 Gew.% granulierten Polysulfid- und/oder Polymercaptan-Elastomeren mit Polysulfid- und/oder Polymercaptan-Flüssigpolymeren des Molmassenbereichs von 500 bis 8000 g/Mol und der gleichen Präpolymerstruktur wie das ausgehärtete Polysulfid- und/oder Polymercaptan-Elastomer in Gegenwart von 1 Mol einer Aminoverbindung pro Mol zu spaltender Bindungen, wie z.B. Trimethylamin, bei Temperaturen von 70 bis 80°C. In vorteilhafter Weise werden dadurch flüssig-pastöse Produkte erhalten, die sich in ihren Eigenschaften von denen der den ausgehärteten Polysulfid- und/oder Polymercaptan-Elastomeren zugrundeliegenden Präpolymeren nicht unterscheiden. Ein besonderer Vorteil des Verfahrens besteht darin, daß aufgrund der vollständigen Wiederaufarbeitbarkeit der ausgehärteten Polysulfid- und/oder Polymercaptan-Elastomeren und der dazu verwendeten Mittel kein Abfall entsteht, der ggf. sogar als Sondermüll entsorgt werden müßte.

Die verfahrensgemäß hergestellten mercaptoendgruppenhaltigen Abbauprodukte lassen sich in vorteilhafter Weise für die erneute Herstellung von ein- oder mehrkomponentigen Polysulfid- und/oder Polymercaptan-Dichtmassen einsetzen. Damit ist nach Abtrennung von Verunreinigungen und ggf. Zuschlagstoffen das Recycling der ausgehärteten Polysulfid- und/oder Polymercaptan-Elastomeren möglich.

### Beispiel 1

20 g eines ausgehärteten Polysulfid-Dichtstoff-Granulats (Durchmesser ca. 0,5 mm) und 100 g 1,6-Hexandithiol werden in einem Ultraschallbad zur Reaktion gebracht. Nach 40 Minuten ist der Polysulfid-Dichtstoff vollständig aufgelöst, und es entsteht eine Suspension der Füllstoffe des Dichtstoffs in dem Reaktionsprodukt aus ausgehärtetem Polysulfid-Polymer und Dithiol.

### Beispiel 2

2 g eines ausgehärteten Polysulfid-Dichtstoff-Granulats (Durchmesser ca. 0,5 mm) werden in 200 g Polysulfid-Flüssigpolymer LP^{(R)}2 (Morton International) 24 Stunden bei 70°C gerührt. Der Polysulfid-Dichtstoff löst sich vollständig auf, und es entsteht eine Suspension der Füllstoffe des Dichtstoffs in dem Flüssigpolymer. Die Viskosität steigt von 80 Pa.s (Brookfield-Viskosimeter DV II, Spindel 4, 1,5 upm, 20°C) auf 200 Pa.s.

### Beispiel 3

100 g eines ausgehärteten Polysulfid-Dichtstoff-Granulats (Durchmesser ca. 0,5 mm) werden in 1000 g Polysulfid-Flüssigpolymer LP^{(R)}3 (Morton International) bei 70°C gerührt. Bereits nach 1,5 Stunden ist der Dichtstoff vollständig aufgelöst. Die Viskosität des reinen Flüssigpolymers beträgt 1600 mPa.s, die der Suspension aus gelöstem Dichtstoff in dem Polysulfid-Flüssigpolymer und aus den Füllstoffen 2700 mPa.s (Brookfield-Viskosimeter DV II, Spindel 3, 60 upm, 20°C).

### Beispiel 4

Eine Suspension von aufgelöstem Polysulfid-Dichtstoff in Polysulfid-Flüssigpolymer gemäß Beispiel 2 wird mit üblichen Zuschlagstoffen nach folgender Rezeptur zu einem Polysulfid-Dichtstoff-Compound angemischt:
400 g Polysulfid-Flüssigpolymer LP^{(R)}2 mit 4 g darin gelöstem Polysulfid-Dichtstoff
100 g Benzylbutylphthalat-Weichmacher
490 g Kreide
10 g 3-Glycidoxypropyltrimethoxysilan-Haftvermittler
Die Dichtstoffpaste wird mit 100 g üblicher Polysulfid-Dichtstoff-Härterpaste auf Basis Mangandioxid vermischt. Nach vollständiger Aushärtung erhält man einen Polysulfid-Dichtstoff mit einer Shore-A-Härte von > 40 und einer maximalen Zugfestigkeit von > 1 MPa.

### Beispiel 5

Eine Suspension von aufgelöstem Polysulfid-Dichtstoff in Polysulfid-Flüssigpolymer wird mit üblichen Zuschlagstoffen nach folgender Rezeptur zu einem Polysulfid-Dichtstoff-Compound angemischt:
340 g Polysulfid-Flüssigpolymer LP^{(R)}3 und 170 g darin gelöstem Polysulfid-Dichtstoff
74 g Benzylbutylphthalat-Weichmacher
408 g Kreide
8 g 3-Glycidoxypropyltrimethoxysilan-Haftvermittler
Die Dichtstoffpaste wird mit 100 g üblicher Polysulfid-Dichtstoff-Härterpaste auf Basis Mangandioxid vermischt. Nach vollständiger Aushärtung erhält man einen Polysulfid-Dichtstoff mit einer Shore-A-Härte von > 40 und einer maximalen Zugfestigkeit von > 1 MPa.

## Patentansprüche

1. Verfahren zur Wiederaufarbeitung ausgehärteter Polysulfid- und/oder Polymercaptan-Elastomere, bei dem 0,5 bis 400 Gew.% der ausgehärteten Polysulfid- und/oder Polymercaptan-Elastomere mit flüssigen Di- oder Polymercaptoverbindungen zu flüssig-pastösen mercaptoendständigen Präpolymeren umgesetzt werden.

2. Verfahren nach Anspruch 1, bei dem die Umsetzung von ausgehärteten Polysulfid- und/oder Polymercaptan-Elastomeren mit niedrigmolekularen Polysulfid- und/oder Polymercapto-Flüssigpolymeren bei Temperaturen von 0 bis 100°C vorgenommen wird.

3. Verfahren nach Anspruch 1 oder 2, bei dem die Umsetzung in Gegenwart einer basischen Verbindung vorgenommen wird.

4. Verfahren nach einem der Ansprüche 1, 2 oder 3, bei dem die Umsetzung von 0,5 bis 20 Gew.% granulierten Polysulfid- und/oder Polymercaptan-Elastomeren mit Polysulfid-Flüssigpolymer mit einem Molekulargewicht von 500 bis 8000 g/Mol und der gleichen Präpolymerstruktur wie das eingesetzte Polysulfid- und/oder Polymercaptan-Elastomer in Gegenwart von 1 Mol Trimethylamin pro Mol zu spaltender Bindungen bei Temperaturen von 70 bis 80°C vorgenommen wird.

5. Verwendung der nach den Ansprüchen 1 bis 4 erhaltenen flüssig-pastösen mercaptoendständigen Präpolymere für die erneute Herstellung von ein- oder mehrkomponentigen Polysulfid- und/oder Polymercaptan-Dichtmassen.
